# NEUE EUROPÄISCHE PATENTSCHRIFT

(11) **EP 2 942 376 B2**
(45) Veröffentlichungstag und Bekanntmachung des Hinweises auf die Entscheidung über den Einspruch: **03.07.2019**
(45) Hinweis auf die Patenterteilung: 06.01.2016
(21) Anmeldenummer: 14167379.8
(22) Anmeldetag: 07.05.2014
(51) Int. Cl.: C09D 7/00

(54) **Dispersionsfarbe und Verfahren zur Herstellung**
Composition and method of producing a dispersion paint
Composition et procédé de fabrication d'une peinture à dispersion

(43) Veröffentlichungstag der Anmeldung: 11.11.2015
(73) Patentinhaber: STO SE & Co. KGaA, 79780 Stühlingen (DE)
(72) Erfinder: Troll, Michael, 79848 Bonndorf-Dillendorf (DE); Schaller, Christian, 73765 Neuhausen (DE); Weier, Andreas, 78647 Trossingen (DE); Gerlach, Günter, 78183 Hüfingen (DE)
(74) Vertreter: Gottschalk, Matthias

(56) Entgegenhaltungen:
- EP-A1- 0 106 707
- EP-A1- 2 754 699
- WO-A1-94/13434
- WO-A1-2010/075922
- WO-A1-2010/094701
- WO-A2-2009/045981
- WO-A2-2009/151802
- DE-A1- 10 011 643
- DE-A1- 19 749 642
- DE-A1- 19 921 876
- DE-A1-102008 031 428
- DE-U1- 29 923 249
- DE-U1- 29 923 250
- DIN EN 13300
- DIN EN ISO 11998
- WINKLER, J.: "Monographie 'Titandioxid'", , 2013, ISBN: 978-3-86630-893-01
- DUBROVINSKY, L. ET AL: "ZUSAMMENFASSUNG", NATURE, vol. 410, 5 April 2001 (2001-04-05), pages 653-654,
- "Produktbeschreibung 'Bleistift-Härteprüfer", BYK-Gardner GmbH, Deutschland,
- DAW Prüfvorschrift Nr. 248, Bestimmung des Abriebwiderstandes (Tabertest), gültig ab 02.02.2018
- ISO 1518, 2. Ausgabe 1992
- Wikipedia-Einträge 'Mohs-Härte', 'Kaolin', 'Cristobalit', 'Rutil', 'Albit', 'Sodalith', 'Brookit', 'Talk' und 'Calcit'.

## Beschreibung

Die Erfindung betrifft eine Dispersionsfarbe für den Innenbereich. Die Dispersionsfarbe soll insbesondere zur Ausbildung matter und/oder besonders farbintensiver Farbbeschichtungen auf einer Wand- oder Deckenoberfläche eines Innenraums geeignet sein. Ferner wird ein Verfahren zur Herstellung einer Dispersionsfarbe angegeben.

### Stand der Technik

Dispersionsfarben der vorstehend genannten Art werden insbesondere zur dekorativen Wand- oder Deckengestaltung von Innenräumen eingesetzt. Besonderer Beliebtheit erfreuen sich dabei Dispersionsfarben in matten und/oder intensiven Farbtönen. Gegenüber glänzenden und/oder hellen Dispersionsfarben weisen diese jedoch den Nachteil auf, dass sie - aufgetragen auf einer Wand- oder Deckenoberfläche - besonders empfindlich gegenüber mechanischer Beanspruchungen sind. Denn bei matten und/oder intensiven Farbtönen liegen die Farbpigmente an der Oberfläche der Farbbeschichtung, so dass sie leicht zerstört und/oder abgerieben werden können. Dies wiederum hat eine lokale Farbveränderung und/oder Erhöhung des Glanzgrades zur Folge, ein unerwünschter Effekt, der auch als "Schreibeffekt" bezeichnet wird. Zutreffenderweise könnte der Effekt auch als Poliereffekt bezeichnet werden.

Aus der EP 2 080 791 A1 geht eine Dispersionsfarbe hervor, die neben einer Polymerdispersion und Füllstoffen, ferner Kunststoffmehl, Wachs und Fasern enthält. Die Dispersionsfarbe soll aufgrund dessen besonders strapazierfähig sein und bei matten und/oder dunklen Farben weniger zum Schreibeffekt neigen. Der Wachsanteil soll zudem die Ausbesserungsfähigkeit der Dispersionsfarbe verbessern.

Aus der WO 2009/045981 A2 ist zudem eine Zusammensetzung bekannt, die Korund als Füllstoff enthält. Der zugegebene Füllstoff soll die IR-Reflektion erhöhen und auf diese Weise eine Wandfarbe bereitstellen, die zur Energieeinsparung beiträgt. Ferner kann die Zusammensetzung Pigmente und ein Bindemittel enthalten.

Darüber hinaus geht aus der EP 0 106 707 A1 eine Zusammensetzung zur Beschichtung von Oberflächen, wie beispielsweise einer Wandoberfläche hervor, die eine Farbe, eine Firnis oder einen Lack umfassen kann, in der bzw. in dem abrasive Partikel mit einer Mohs-Härte > 12 enthalten sind, um eine abriebfeste und sehr gut haftende Beschichtung zu schaffen.

Ausgehend von dem vorstehend genannten Stand der Technik liegt der vorliegenden Erfindung die Aufgabe zugrunde, eine Dispersionsfarbe anzugeben, welche aufgetragen auf einer Wand- oder Deckenoberfläche eine hohe mechanische Stabilität, insbesondere in Bezug auf das Abriebverhalten, aufweist. Dadurch soll - insbesondere bei matten und/oder intensiven Farbtönen - der Schreibeffekt gemindert werden. Ferner soll die Dispersionsfarbe leicht auszubessern und/oder leicht zu reinigen sein, nachdem sie auf einer Wand- oder Deckenoberfläche aufgetragen worden ist.

Zur Lösung der Aufgabe wird die Dispersionsfarbe mit den Merkmalen des Anspruchs 1 vorgeschlagen. Bevorzugte Weiterbildungen der Erfindung sind den Unteransprüchen zu entnehmen. Ferner wird ein Verfahren zur Herstellung der erfindungsgemäßen Dispersionsfarbe angegeben.

### Offenbarung der Erfindung

Die zur Herstellung einer erfindungsgemäßen Dispersionsfarbe vorgeschlagene Zusammensetzung enthält 10 bis 60 Gew.-% Bindemittel und 40 bis 90 Gew.-% Hartfüllstoffe bezogen auf den Gesamtfeststoffgehalt der Zusammensetzung. Als Hartfüllstoffe werden vorliegend solche Füllstoffe bezeichnet, die eine Mohs-Härte ≥ 5, vorzugsweise ≥ 5,5 und weiterhin vorzugsweise ≥ 6 besitzen. Die Zusammensetzung enthält als Hartfüllstoffe Silikate, Carbide, Nitride und/oder Korunde, wobei die Hartfüllstoffe unterschiedliche Teilchengrössen besitzen und in einer zumindest bimodalen Teilchengrössenverteilung vorliegen, und wobei die Hartfüllstoffe einen Hartfüllstoff (A) und einen Hartfüllstoff (B) enthalten, wobei hinsichtlich der Teilchengrösse der Hartfüllstoff (A) einen d50-Wert von 40µm - 150 µm besitzt und der Hartfüllstoff (B) einen d50-Wert von 1µm - 30 µm besitzt. Bei der Zusammensetzung werden in Bezug auf die Füllstoffe ausschließlich oder überwiegend "harte" Füllstoffe verwendet. Das heißt, dass keine oder nur wenige "weiche" Füllstoffe Verwendung finden. Die Minimierung des Weichfüllstoffanteils in der Zusammensetzung ermöglicht die Herstellung einer Dispersionsfarbe, die - aufgetragen auf eine Wand- oder Deckenoberfläche - deutlich unempfindlicher gegenüber mechanischen Beanspruchungen ist. Die Vorteile kommen insbesondere zum Tragen, wenn die Dispersionsfarbe matt und/oder stark abgetönt ist, d. h. bei intensiven Farbtönen. Denn dann wirkt die hohe mechanische Stabilität der Dispersionsfarbe dem vorstehend genannten Schreibeffekt entgegen. In der Folge treten unerwünschte lokale Verfärbungen und/oder Erhöhungen des Glanzgrades deutlich weniger auf, so dass die den Farbanstrich aufweisende Wand- oder Deckenoberfläche lange optisch ansprechend bleibt. Insofern ist die angegebene Dispersionsfarbe insbesondere zur farbigen Wand- oder Deckengestaltung in öffentlichen Bereichen mit hohem Besucherverkehr geeignet.

Bevorzugt ist in der Zusammensetzung eine Polymerdispersion als Bindemittel enthalten, die eine Glasübergangstemperatur T_{g} < 40°C, vorzugsweise < 30°C, weiterhin vorzugsweise < 20°C besitzt. Die Polymerdispersion bildet eine elastische Bindemittelmatrix aus, in welcher die vergleichsweise harten und damit starren Hartfüllstoffe eingelagert werden. Auf diese Weise ermöglicht die Zusammensetzung die Herstellung einer Dispersionsfarbe, die - aufgetragen auf einer Wand- oder Deckenoberfläche - besonders strapazierfähig ist. Denn zum Einen verhindert die Härte der Füllstoffe deren Zerstörung bei mechanischer Beanspruchung - dies gilt insbesondere für an der Oberfläche frei liegende Füllstoffe -, zum Anderen wirkt die Elastizität der die Füllstoffe umgebenden Bindemittelmatrix einem Abrieb entgegen.

Die Polymerdispersion kann insbesondere Acrylat, Styrol, Styrolacrylat, Vinylacetat, Vinylpropionat oder Mischungen hieraus enthalten. Alternativ oder ergänzend können Urethanhomo- und/oder -copolymere verwendet werden. Als Polyvinylacetate sind Copolymerisate, beispielsweise mit Vinylestern, Maleinaten, Fumaraten, Acrylaten oder Ethylen; oder Terpolymerisate mit Ethylen und Vinylchlorid bevorzugt. Geeignete Polyvinylpropionatdispersionen nutzen vorzugsweise Polyvinylpropionat, insbesondere als Homopolymerisat oder als Copolymerisat, beispielsweise mit Acrylaten. In geeigneten Polystyroldispersionen liegt Polystyrol, insbesondere als Homopolymerisat oder als Copolymerisat vor. Bevorzugte Styrolcopolymerisate sind vorzugsweise solche mit Acrylaten oder Butadien. Besonders bevorzugt werden Vinylacetat-ethylen-copolymere als Polymerbindemittel verwendet.

Weiterhin sind Silikate, Carbide, Nitride und/oder Korunde als "harte" Füllstoffe in der Zusammensetzung enthalten. Als silikatischer Füllstoff kommt bzw. kommen insbesondere Quarz, Cristobalit, Feldspat und/oder Kieselgur in Betracht. Ferner sind gefällte Kieselsäuren und Gläser, beispielsweise Alkalisilikatgläser, Borosilikatgläser und/oder Quarzgläser, als geeignete silikatische Hartfüllstoffe zu nennen. Die erfindungsgemäße Zusammensetzung kann Hartfüllstoffe einer einzigen Art oder verschiedener Arten enthalten. Das heißt, dass auch Hartfüllstoffmischungen enthalten sein können.

In Weiterbildung der Erfindung wird vorgeschlagen, dass neben den Hartfüllstoffen auch Weichfüllstoffe in der Zusammensetzung enthalten sind. Der Anteil der Weichfüllstoffe beträgt jedoch weniger als 5 Gew.-%, vorzugsweise weniger als 3 Gew.-%, weiterhin vorzugsweise weniger als 2 Gew.-% bezogen auf den Gesamtfeststoffgehalt der Zusammensetzung. Als Weichfüllstoffe werden vorliegend solche Füllstoffe bezeichnet, die eine Mohs-Härte < 3, vorzugsweise <2, weiterhin vorzugsweise < 1 besitzen. Bezogen auf das Gesamtgewicht der enthaltenen Hartfüllstoffe beträgt der Weichfüllstoffanteil weniger als 10 Gew.-%, vorzugsweise weniger als 6 Gew.-%, weiterhin vorzugsweise weniger als 4 Gew.-%.

Ein geringer Weichfüllstoffanteil verbessert nochmals die gewünschten Eigenschaften einer aus einer solchen Zusammensetzung hergestellten Dispersionsfarbe. Denn die "weichen" Füllstoffe werden zwischen den "harten" Füllstoffen in der Bindemittelmatrix eingelagert und wirken auf diese Weise als eine Art "Schmierung". In der Folge verbessern sich die Abriebeigenschaften einer auf einer Wand- oder Deckenoberfläche aufgetragenen Dispersionsfarbe, die aus einer solchen Zusammensetzung hergestellt wurde.

Eine Zusammensetzung zur Herstellung einer erfindungsgemäßen Dispersionsfarbe kann wiederum Weichfüllstoffe einer einzigen Art oder verschiedener Arten enthalten. Das heißt, dass auch Weichfüllstoffmischungen enthalten sein können.

Vorteilhafterweise besitzen die in der Zusammensetzung enthaltenen Weichfüllstoffe hinsichtlich der Teilchengröße einen d50-Wert von 0,1 µm bis 40 µm, vorzugsweise von 0,5 µm bis 30 µm, weiterhin vorzugsweise von 1 µm bis 25 µm. Dies verbessert die Eigenschaften der Weichfüllstoffe, sich zwischen die Hartfüllstoffe zu legen.

Erfindungsgemäß wird vorgeschlagen, dass die in der Zusammensetzung enthaltenen Hartfüllstoffe unterschiedliche Teilchengrößen besitzen und in einer zumindest bimodalen Teilchengrößenverteilung vorliegen. Dies erweist sich insbesondere dann als vorteilhaft, wenn auf die Zugabe von Weichfüllstoffen vollständig verzichtet wird. Denn dann lagern sich die feineren Hartfüllstoffe zwischen die gröberen Hartfüllstoffe in die elastische Bindemittelmatrix ein.

Gemäß der Erfindung sind demnach in einer Zusammensetzung zur Herstellung einer erfindungsgemäßen Dispersionsfarbe wenigstens ein erster Hartfüllstoff (A) und ein zweiter Hartfüllstoff (B) enthalten, die sich zumindest im Hinblick auf ihre Teilchengröße unterscheiden. Der Hartfüllstoff (A) besitzt einen d50-Wert von 40 bis 150 µm, vorzugsweise von 50 bis 130 µm, weiterhin vorzugsweise von 60 bis 120 µm. Der Hartfüllstoff (B) besitzt demgegenüber einen d50-Wert von 1 µm bis 30 µm, vorzugsweise von 2 µm bis 25 µm, weiterhin vorzugsweise 5 µm bis 20 µm.

Als günstig hat sich bei Verwendung von Hartfüllstoffen unterschiedlicher Teilchengrößen insbesondere die Zugabe eines "groben" Hartfüllstoffs (A) erwiesen, der einen d90-Wert > 30 µm, vorzugsweise > 50 µm, weiterhin vorzugsweise > 70 µm besitzt.

Idealerweise beträgt das Mengenverhältnis Hartfüllstoffs (A) : Hartfüllstoff (B) 0,1-10 : 1, vorzugsweise 0,1-8 : 1, weiterhin vorzugsweise 0,2-5 : 1.

Als weiterbildende Maßnahme wird vorgeschlagen, dass wenigstens einer der enthaltenen Hartfüllstoffe, vorzugsweise der jeweils gröbere, nicht in einer kontinuierlichen Teilchengrößenverteilung vorliegt, sondern in einer Teilchengrößenfraktion. Als vorteilhaft wird eine Teilchengrößenfraktion von 30 bis 200 µm, vorzugsweise von 40 bis 150 µm, weiterhin vorzugsweise von 50 bis 120 µm angesehen. Je einheitlicher die Teilchengröße, desto vorteilhafter in Bezug auf die gewünschten Eigenschaften einer aus der Zusammensetzung hergestellten Dispersionsfarbe.

Zur Verbesserung der Verarbeitungseigenschaften der Zusammensetzung und/oder der hieraus hergestellten Dispersionsfarbe wird darüber hinaus vorgeschlagen, dass wenigstens ein Additiv, wie beispielsweise Netz-und/oder Dispergiermittel, Entschäumer, Verdicker, Konservierungsmittel, enthalten ist. Der Anteil der Additive liegt jedoch vorzugsweise bei weniger als 5 Gew.-%, weiterhin vorzugsweise bei weniger als 4 Gew.-% bezogen auf den Gesamtfeststoffgehalt der Zusammensetzung.

Ferner kann in der Zusammensetzung wenigstens ein organisches und/oder anorganisches Pigment oder Färbemittel enthalten sein. Alternativ oder ergänzend können Pigmente oder Färbemittel einer Dispersionsfarbe zugegeben werden, die aus einer solchen Zusammensetzung hergestellt wurde.

Bevorzugt wird zur Herstellung einer erfindungsgemäßen Dispersionsfarbe der hierzu verwendeten Zusammensetzung Wasser zugegeben. Zumindest ein Teil des Wassers kann dabei durch die Bindemitteldispersion zugegeben werden. Der Wasseranteil beträgt vorzugsweise 20 bis 50 Gew.-%. bezogen auf das Gesamtgewicht einer derart hergestellten Dispersionsfarbe.

Die Zugabe von Wasser allein führt noch nicht zu einer verkaufsfertigen Dispersionsfarbe. Denn um eine solche zu erhalten, muss erst noch der Farbton festgelegt werden. Der mit Wasser angemachten Formulierung werden hierzu Farbpigmente und/oder Weißpigmente zugegeben, wobei die Zugabe der Pigmente in der Regel "nass in nass" erfolgt, um ein Verklumpen zu verhindern und eine gleichmäßige Durchmischung zu erzielen.

Eine auf diese Weise unter Verwendung einer Zusammensetzung hergestellte Dispersionsfarbe erweist sich - aufgetragen auf einer Wand- oder Deckenoberfläche - als besonders strapazierfähig. Denn zum Einen wird durch die enthaltenen Hartfüllstoffe die mechanische Stabilität erhöht. Zum Anderen verbessert die elastische Bindemittelmatrix, in welcher die Hartfüllstoffe eingelagert sind, die Abriebfestigkeit. Ein hieraus hergestellter Farbanstrich neigt daher bei einer mechanischen Beanspruchung deutlich weniger zu lokalen Farbveränderungen oder Glanzstellen, dem sogenannten Schreibeffekt. Dies wirkt sich insbesondere als Vorteil bei matten und/oder intensiven Farbtönen aus. Mit der verbesserten Abriebfestigkeit geht somit ferner eine verbesserte Reinigungsfähigkeit einher. Als weiterer Vorteil, insbesondere bei der Verwendung matter Farben, zeigt sich eine verbesserte Ausbesserbarkeit. Denn Stellen, die lokal ausgebessert worden sind, zeichnen sich deutlich weniger stark oder gar nicht vom Untergrund ab.

Die nachfolgend aufgeführten Ausführungsbeispiele geben jeweils eine Formulierung zur Herstellung einer erfindungsgemäßen Dispersionsfarbe an. Durch Zugabe von Pigmenten kann aus den angegebenen Formulierungen eine verkaufsfertige Dispersionsfarbe hergestellt werden, welche die vorstehend genannten Vorteile aufweist.

**Ausführungsbeispiel 1**

| | |
|---|---|
| 27,5 Gew.-% | Wasser |
| 2,5 Gew.-% | Additive |
| 20 Gew.-% | Silikatischer Hartfüllstoff (d50-Wert > 20 µm) |
| 20 Gew.-% | Silikatischer Hartfüllstoff (d50-Wert > 60 µm) |
| 0 Gew.-% | Weichfüllstoff (d50-Wert < 25 µm) |
| 30 Gew.-% | Polymerdispersion (50% fest) |
| 100 Gew.-% | |

**Ausführungsbeispiel 2**

| | |
|---|---|
| 25 Gew.-% | Wasser |
| 3 Gew.-% | Additive |
| 28 Gew.-% | Silikatischer Hartfüllstoff (d50-Wert > 20 µm) |
| 12 Gew.-% | Silikatischer Hartfüllstoff (d50-Wert > 60 µm) |
| 1 Gew.-% | Weichfüllstoff (d50-Wert < 25 µm) |
| 31 Gew.-% | Polymerdispersion (50% fest) |
| 100 Gew.-% | |

**Ausführungsbeispiel 3**

| | |
|---|---|
| 28 Gew.-% | Wasser |
| 3 Gew.-% | Additive |
| 16 Gew.-% | Silikatischer Hartfüllstoff (d50-Wert > 20 µm) |
| 23 Gew.-% | Silikatischer Hartfüllstoff (d50-Wert > 60 µm) |
| 0 Gew.-% | Weichfüllstoff (d50-Wert < 25 µm) |
| 30 Gew.-% | Polymerdispersion (50% fest) |
| 100 Gew.-% | |

## Patentansprüche

1. Dispersionsfarbe für den Innenbereich, dadurch erhältlich dass einer Zusammensetzung, die
10 bis 60 Gew.-% Bindemittel und
40 bis 90 Gew.-% Hartfüllstoffe
bezogen auf den Gesamtfeststoffgehalt der Zusammensetzung enthält,
**dadurch gekennzeichnet, dass** Silikate, Carbide, Nitride und/oder Korunde als Hartfüllstoffe enthalten sind und die Hartfüllstoffe eine Mohs-Härte ≥ 5, vorzugsweise ≥ 5,5 und weiterhin vorzugsweise ≥ 6 besitzen, wobei die Hartfüllstoffe unterschiedliche Teilchengrößen besitzen und in einer zumindest bimodalen Teilchengrößenverteilung vorliegen, Wasser zugegeben wird, wobei die Hartfüllstoffe einen Hartfüllstoff (A) und ein Hartfüllstoff (B) enthalten, wobei hinsichtlich der Teilchengröße der Hartfüllstoff (A) einen d50-Wert von 40 bis 150 µm besitzt und der Hartfüllstoff (B) einen d50-Wert von 1 µm bis 30 µm besitzt.

2. Dispersionsfarbe nach Anspruch 1,
**dadurch gekennzeichnet, dass** eine Polymerdispersion als Bindemittel enthalten ist, die eine Glasübergangstemperatur T_{g} < 40°C, vorzugsweise < 30°C, weiterhin vorzugsweise < 20°C besitzt.

3. Dispersionsfarbe nach einem der vorhergehenden Ansprüche,
**dadurch gekennzeichnet, dass** weniger als 5 Gew.-%, vorzugsweise weniger als 3 Gew.-%, weiterhin vorzugsweise weniger als 2 Gew.-% Weichfüllstoffe bezogen auf den Gesamtfeststoffgehalt der Zusammensetzung enthalten sind, wobei die Weichfüllstoffe eine Mohs-Härte < 3, vorzugsweise < 2, weiterhin vorzugsweise < 1 besitzen.

4. Dispersionsfarbe nach Anspruch 3,
**dadurch gekennzeichnet, dass** die Weichfüllstoffe hinsichtlich der Teilchengröße einen d50-Wert von 0,1 µm bis 40 µm, vorzugsweise von 0,5 µm bis 30 µm, weiterhin vorzugsweise von 1 µm bis 25 µm besitzen.

5. Dispersionsfarbe nach einem der vorhergehenden Ansprüche,
**dadurch gekennzeichnet, dass** hinsichtlich der Teilchengröße der Hartfüllstoff (A) einen d50-Wert von 50 bis 130 µm, weiterhin vorzugsweise von 60 bis 120 µm besitzt und der Hartfüllstoff (B) einen d50-Wert von 2 µm bis 25 µm, weiterhin vorzugsweise 5 µm bis 20 µm besitzt.

6. Dispersionsfarbe nach Anspruch 5,
**dadurch gekennzeichnet, dass** der Hartfüllstoff (A) einen d90-Wert
> 30 µm, vorzugsweise > 50 µm, weiterhin vorzugsweise > 70 µm besitzt.

7. Dispersionsfarbe nach einem der vorhergehenden Ansprüche,
**dadurch gekennzeichnet, dass** ein Hartfüllstoff enthalten ist, dessen Teilchen in einer Teilchengrößenfraktion von 30 bis 200 µm, vorzugsweise von 40 bis 150 µm, weiterhin vorzugsweise von 50 bis 120 µm vorliegen.

8. Dispersionsfarbe nach einem der vorhergehenden Ansprüche,
**dadurch gekennzeichnet, dass** wenigstens ein Additiv, wie beispielsweise Netz-und/oder Dispergiermittel, Entschäumer, Verdicker, Konservierungsmittel, enthalten ist.

9. Dispersionsfarbe nach einem der vorhergehenden Ansprüche,
**dadurch gekennzeichnet, dass** wenigstens ein organisches und/oder anorganisches Pigment oder Färbemittel enthalten ist.

10. Verfahren zur Herstellung einer Dispersionsfarbe nach einem der Ansprüche 1 bis 9,
**dadurch gekennzeichnet, dass** der Zusammensetzung Wasser zugegeben wird.

11. Verfahren nach Anspruch 10,
**dadurch gekennzeichnet, dass** der Zusammensetzung nach der Zugabe von Wasser wenigstens ein organisches und/oder anorganisches Pigment oder Färbemittel zugegeben wird.

## Claims

1. Emulsion paint for the interior which can be obtained by adding water to a compound containing
10 to 60% by weight binding agent and
40 to 90% by weight hard filling materials
relative to the total solid content of the compound, **characterized in that** silicates, carbides, nitrides and/or corundums are contained as the hard filling materials and the hard filling materials have a Mohs hardness ≥ 5, preferably ≥ 5.5 and further preferably ≥ 6, wherein the hard filling materials have different particle sizes and are present in an at least bimodal particle size distribution, wherein the hard filling materials contain a hard filling material (A) and a hard filling material (B), wherein the hard filling material (A) has a d50 value of 40 to 150 µm in respect of particle size and the hard filling material (B) has a d50 value of 1 µm to 30 µm in respect of particle size.

2. Emulsion paint according to Claim 1,
**characterized in that** a polymer dispersion having a glass transition temperature T_{g} < 40 °C, preferably < 30 °C, further preferably < 20 °C is contained as the binding agent.

3. Emulsion paint according to any one of the preceding claims,
**characterized in that** less than 5% by weight, preferably less than 3% by weight, further preferably less than 2% by weight soft filling materials relative to the total solid content of the compound are contained, wherein the soft filling materials have a Mohs hardness < 3 preferably < 2, further preferably < 1.

4. Emulsion paint according to Claim 3,
**characterized in that** the soft filling materials have a d50 value of 0.1 µm to 40 µm, preferably 0.5 µm to 30 µm, further preferably 1 µm to 25 µm in respect of particle size.

5. Emulsion paint according to any one of the preceding claims,
**characterized in that** the hard filling material (A) has a d50 value of 50 to 130 µm, further preferably 60 to 120 µm in respect of particle size, and the hard filling material (B) has a d50 value of 2 µm to 25 µm, further preferably 5 µm to 20 µm.

6. Emulsion paint according to Claim 5,
**characterized in that** the hard filling material (A) has a d90 value > 30 µm, preferably > 50 µm, further preferably > 70 µm.

7. Emulsion paint according to any one of the preceding claims,
**characterized in that** a hard filling material is contained of which the particles lie within a particle size fraction from 30 to 200 µm, preferably from 40 to 150 µm, further preferably from 50 to 120 µm.

8. Emulsion paint according to any one of the preceding claims,
**characterized in that** at least one additive, for example a wetting and/or dispersing agent, antifoaming agent, thickening agent, preservative, is contained.

9. Emulsion paint according to any one of the preceding claims,
**characterized in that** at least one organic and/or inorganic pigment or dyestuff is contained.

10. Method for producing an emulsion paint according to any one of Claims 1 to 9,
**characterized in that** water is added to the compound.

11. Method according to Claim 10,
**characterized in that** following the addition of water, at least one organic and/or inorganic pigment or dyestuff is added to the compound.

## Revendications

1. Peinture à dispersion destinée à l'intérieur, susceptible d'être obtenue en ce qu'on ajoute de l'eau à une composition qui contient
de 10 à 60 % en poids d'agent liant et
de 40 à 90 % en poids d'agents de charge solides
en rapport à la teneur totale en solides de la composition,
**caractérisée en ce que** des silicates, des carbures, des nitrures et/ou des corindons sont contenus en tant qu'agents de charge solides et **en ce que** les agents de charge solides font preuve d'une dureté de Mohs ≥ 5, de préférence de ≥ 5,5 et de manière préférentielle par ailleurs, de ≥ 6, les agents de charge solides disposant de plusieurs tailles de particules et se présentant dans une distribution bimodale des tailles de particules, les agents de charge solides contenant un agent de charge solide (A) et un agent de charge solide (B), au niveau de la taille des particules, l'agent de charge solide (A) détenant une valeur d50 de 40 à 150 µm et l'agent de charge solide (B) détenant une valeur d50 de 1 µm à 30 µm.

2. Peinture à dispersion selon la revendication 1,
**caractérisée en ce qu'**elle contient en tant qu'agent liant une dispersion polymère qui fait preuve d'une température de transition vitreuse T_{g} < 40°C, de préférence < 30°C, de manière préférentielle par ailleurs, < 20°C.

3. Peinture à dispersion selon l'une quelconque des revendications précédentes,
**caractérisée en ce qu'**elle contient moins de 5 % en poids, de préférence moins de 3 % en poids, de manière préférentielle par ailleurs, moins de 2 % en poids d'agents de charge mous en rapport à la teneur totale en solides de la composition, les agents de charge mous faisant preuve d'une dureté de Mohs < 3, de préférence < 2, de manière préférentielle par ailleurs < 1.

4. Peinture à dispersion selon la revendication 3,
**caractérisée en ce qu'**en ce qui concerne la taille des particules, les agents de charge mous détiennent une valeur d50 de 0,1 µm à 40 µm, de préférence de 0,5 µm à 30 µm, de manière préférentielle par ailleurs, de 1 µm à 25 µm.

5. Peinture à dispersion selon l'une quelconque des revendications précédentes,
**caractérisée en ce qu'**en ce qui concerne la taille des particules, l'agent de charge solide (A) détient une valeur d50 de 50 à 130 µm, de manière préférentielle par ailleurs de 60 à 120 µm et l'agent de charge solide (B) détient une valeur d50 de 2 µm à 25 µm, de manière préférentielle par ailleurs, de 5 µm à 20 µm.

6. Peinture à dispersion selon la revendication 5,
**caractérisée en ce que** l'agent de charge solide (A) détient une valeur d90 > 30 µm, de préférence > 50 µm, de manière préférentielle par ailleurs > 70 µm.

7. Peinture à dispersion selon l'une quelconque des revendications précédentes,
**caractérisée en ce qu'**elle contient un agent de charge solide dont les particules sont présentes dans une fraction de tailles de particules de 30 à 200 µm, de préférence de 40 à 150 µm, de manière préférentielle par ailleurs, de 50 à 120 µm.

8. Peinture à dispersion selon l'une quelconque des revendications précédentes,
**caractérisée en ce qu'**elle contient au moins un additif, comme par exemple un agent mouillant et/ou un agent de dispersion, un agent anti-moussant, un épaississant, un conservateur.

9. Peinture à dispersion selon l'une quelconque des revendications précédentes,
**caractérisée en ce qu'**elle contient au moins un pigment organique et/ou anorganique ou colorant.

10. Procédé, destiné à fabriquer une peinture à dispersion selon l'une quelconque des revendications 1 à 9,
**caractérisé en ce qu'**on ajoute de l'eau à la composition.

11. Procédé selon la revendication 10,
caractérisé qu'après l'ajout de l'eau, on ajoute à la composition au moins un pigment organique et/ou anorganique ou colorant.
